# EUROPEAN PATENT APPLICATION

(11) **EP 2 068 054 A2**
(43) Date of publication of application: **10.06.2009**
(21) Application number: 09151503.1
(22) Date of filing: 19.11.2003
(51) Int. Cl.: F16K 15/14

(54) **Membrane valve and second pressure reducing stage for two-stage regulators for underwater use provided with said valve**

(30) Priority: 04.02.2003 IT SV20030003
(62) Divisional of application: 03104276.5
(71) Applicant: SCUBAPRO EUROPE S.r.l., I-16030 Casarza Ligure (GE) (IT)
(72) Inventor: Semeia, Roberto, 16033 Lavagna (GE) (IT)
(74) Representative: Karaghiosoff, Giorgio Alessandro

(57) **Abstract**

A membrane valve, for a second stage for reducing the pressure in two stage regulators for underwater use, comprising a shutter disk (1) of flexible elastic material cooperating with a valve seat (2) comprising at least one passage opening (302) provided in a wall (202) and which shutter disk (1) comprises means (201) for clamping to the seat valve (2), which clamping means are engaged at least in a complementary clamping housing (102) of the valve seat (2) and which valve seat (2) comprises a continuous surface and closed on itself which is in sealingly contact with at least a corresponding peripheral sealing lip (101) of the shutter disk (1) and which contact surface between the valve seat (2) and the sealing lip (101) of the shutter disk (1) and which sealing lip surround at least a passage opening (302), according to the invention retaining means (3, 201') of the shutter disk, which means are located against the valve seat (2) at least along a line or a band extending along a secant of the shutter disk (1) itself.

## Description

The invention relates to a second pressure reducing stage for two-stage regulators for underwater use with a membrane valve comprising a shutter disk of elastic flexible material cooperating with a valve seat composed at least of a passage opening that is provided in a wall and which shutter disk comprises fastening means to the valve seat 2, which fastening means are engaged in at least a complementary fastening housing of the valve seat and which valve seat comprises a continuous surface closed on itself in sealingly contact with at least a corresponding peripheral sealing lip of the shutter disk, which contact surface of the valve seat with the sealing lip of the shutter disk and which sealing lip surround at least a passage opening.

Valves of this type are known and broadly used in several fields and particularly in underwater breathing apparatus, where valves are used for the air outflow for example in regulators or for the water outflow accumulating in masks and snorkels. It has been found that said valves are effective and very inexpensive. During the condition of use of said valves, the shutter disk closes the passage between a chamber whose pressure is lower than the external pressure and it is subjected to the action of the external pressure that exerts the sealing pressure of the shutter disk against the valve seat. Inside the chamber pressure peaks voluntarily generated or provided for various reasons operate in contrast with the external pressure on the shutter disk and when such pressure is exceeded by the said inside pressure peaks, the disk lifts while allowing the flux outflow from the chamber.

While these known valves excellently carry out the above function, the shutter disk behaviour is not yet optimum whereby valves have some malfunctions. Particularly current membrane valves have a perfect circular and coaxial shape with respect to the fastening pin. When an overpressure occurs inside a chamber provided with a membrane valve of this known type, the shutter disk aims to inflate before lifting from the valve seat, thus at least partially compensating the pressure peak by the elastic deformation. This effect has been found also in shutter disks having a cup or trapezoidal cross section, with a peripheral, continuous conical sealing lip.

The partial absorption of pressure peak inside the chamber, i.e. on the valve side generally at lower pressure, makes difficult the calibration of opening pressure thereof, whereby it is not possible to provide a precise automatic outflow overpressure. Moreover, particularly in underwater breathing apparatus, as second reduction stage of regulators or snorkels or even masks having membrane outflow valves, the elastic swelling effect of the shutter disk provides a greater effort for the user. Hence, in all the above devices the internal overpressure is generated by a voluntary blowing act of the user, as in the case of snorkel or mask, or the overpressure is a result of a physiological activity for example the normal expiration phase such as in second stages of underwater breathing apparatus. Particularly in this latter case, the greater effort for opening the outflow valve is particularly annoying because it is connected to a continuous activity and the user is required to have a greater effort and a lower comfort and simplicity in doing the normal breathing action.

Moreover, the elastic deformation behaviour of the shutter disk, provides the fact that when the pressure in opening direction is enough for opening the shutter disk, the lifting of the disk or of the sealing lip thereof is shared in a uniform or substantially uniform manner on the whole circumference and the opening gap between the shutter disk and the valve seat is relatively thin. Therefore, the outflow flux is not free but it is subjected to a certain strength due to the passage that is quite thin between the valve seat and the shutter disk.

The invention aims to provide a second pressure reducing stage for two-stage regulators for underwater use with a membrane outflow valve as described at the beginning that, by means of simple and cheap arrangements, can obviate the above drawbacks guaranteeing a greater opening precision with reference to pressure conditions acting on the shutter disk in the opening direction of the valve and a greater section of the outflow passage when the valves opens.

The invention attains the above purposes by a membrane valve as described at the beginning, wherein in conjunction with the shutter disk means are provided for retaining the shutter disk in position against the valve seat along at least a line or at least a band thereof which line or band extends along a secant of the shutter disk itself.

By means of these retaining means, when the pressure exerts in the opening direction the elastic swelling deformation of the shutter disk is prevented and moreover a kind of hinge line is formed between the two half or the two portions of the shutter disk separated by the line or the band along which the retaining means operate. With the opening said two half or two portions lift with an oscillating movement around an axis that substantially coincides with the line or the band along which operate the retaining means on the shutter disk. Such movement allows to obtain flux passage sections, in the lifted condition of the shutter disk from the valve seat, that are greater than those obtainable in operation conditions of the known membrane valves.

Moreover, by acting on the width of the secant band along which the retaining means operate and eventually also on the number of said secant bands or on the number of secant lines it is possible to calibrate in a precise way the threshold pressure that cause the opening of the valve.

Therefore it is possible also to provide different configurations of the retaining means with relation to the retaining function.

A first variation consists in the fact that means for retaining the shutter disk against the valve seat are provided along two different lines or bands which are secant to the shutter disk itself.

In this case, means for retaining the shutter disk against the valve seat may operate along two different lines or bands secant the shutter disk which bands extend at least for a portion of their length or for their whole length in parallel directions one with respect to the other. It is also possible to provide that the means for retaining the shutter disk against the valve seat operate for a portion of their extension along the shutter disk, along a single common secant line or band and for the remaining portion of their extension along the shutter disk, along two different lines or two different bands which are secant to the shutter disk.

Moreover the secant line or band may be coincident with a median or diametral axis of the shutter disk or with a line or band offset with respect to said median or transversal axis.

When two different lines or two different secant bands are provided along which the retaining means operate, said lines or bands can be arranged symmetrically with respect to a parallel median or diametral axis of the shutter disk (1) or also asymmetrically, for example one on a side and the other on the opposite side or also both on a single side with respect to a parallel to the median or diametral axis of the shutter disk.

It is also possible to provide retaining means that are realized in such a way to cooperate in a continuous or discontinuous way with the shutter disk, i.e. remaining in contact with the shutter disk for the whole line or secant band or coming into contact for sections spaced one from the other of said secant line or band.

Retaining means can be composed of one or more stop ribs resting along said secant line or lines or said band or bands against the side of the shutter disk opposite to the valve seat or of rows of stop pins fabricated similarly to the clamping pin that generally is formed of a central appendix of the shutter disk and clamped by means of elastic shrinkage in a hole of a hub of the valve seat.

When more lines and bands are provided along which the retaining means operate it is possible to provide also in conjunction a stop rib and a row of stop pins extending along various lines or various bands which are secant to the shutter disk.

Other particular embodiments will be described below in more details and they are object of the dependent claims.

According to an improvement of the invention, in conjunction with the retaining means operating along a single secant line or a single secant band or along two secant lines or bands, it is possible to provide as a further advantageous feature the fact that with respect to the clamping pin and/or the clamping hole thereof, at least the shutter disk and/or the valve seat have a non-circular shape or a shape which is not inscribable in a circle.

In this case it is advantageous that retaining means extend along a straight line coincident with the clamping pin and/or the clamping hole thereof.

It is possible to provide that at least the shutter disk and/or the valve seat have a rotational asymmetrical shape with respect to the clamping pin and/or the clamping hole thereof, that is the clamping pin and/or the clamping hole thereof have an eccentric location with respect to the shutter disk and to the valve seat.

According to a further advantageous feature, on the contrary at least the shutter disk and/or the valve seat have a rotational symmetrical shape with respect to the clamping pin and/or the clamping hole thereof.

Particularly, at least the shutter disk and/or the valve seat have an symmetrically or asymmetrically elongate shape in two directions diametrically opposed with reference to the clamping pin and/or the clamping hole thereof and which directions can be at least transversal, particularly perpendicular to at least a line or at least to a band along which the retaining means operate.

A more specific embodiment provides that the shutter disk have an elliptical, oval shape or similar shape, at least one line or band or both the lines or bands along which operate the retaining means being oriented according to the minor axis of the shutter disk and/or of the valve seat.

When it should be useful or functional, naturally the invention provides also the opportunity to manufacture the shutter disk and/or the valve seat in such a way so that they have peripheral symmetric or asymmetric extension lobes with respect to at least one line or one band or with respect to both lines and bands along which the retaining means operate and/or with respect to the clamping pin and/or the clamping hole thereof.

The elongation of the shutter disk and/or of the valve seat in a transversal or perpendicular direction to the hinge line of two half or two portions of the disk that are defined by the retaining means guarantees firstly the fact to have a greater section for the outlet passage of the flux in opened condition of the membrane valve. Considering equal the oscillation angle in a direction departing from the valve seat, the distance between the peripheral edge of the shutter disk at the end more distant from the at least one line or one band or from both the lines or bands along which the retaining means operate, becomes greater as it becomes greater the distance of said peripheral edge from the at least one line or one band or from both the lines and bands along which the retaining means operate.

It will be noted that the valve according to the embodiment of the invention with circular geometrical shutter disk or with elongate shutter disk have a further functional characteristic that, as will be noted below, provides great functional advantages particularly in second stages of underwater breathing apparatus. Hence, the valve opening mode with the shutter disk bending as a book with its two half directed in a departing direction from the valve seat provides, as already described above, that the greatest opening section is at the area of the peripheral edges of the shutter disk more distant from at least one line or one band or from both the lines or bands along which the retaining means operate and it reduces step by step towards said line/s or band/s. This causes a kind of directional effect on the output flux from the membrane valve.

In a second reducing stage of a underwater breathing apparatus, of the type comprising a chamber for supplying a gas or a gas mixture, that can be breath by means of a mouthpiece communicating with said chamber, which chamber has an inlet connected with a first pressure reducing stage that is connected with a breathable gas or gas mixture source at high pressure, particularly a bottle, by means of a valve that can be operated in the opening direction by the inspiration depression and in the closing direction by means of the pressing of a closing spring and which chamber has in a wall separating said chamber with the outside at least a valve for the outflow of air that has been breathed out, the use of the membrane valve according to the present invention of one or more of the variations described above and according to one or more variations of the following specification provides firstly the advantage to reduce the effort that is necessary for the outflow of the breathed out air through the membrane valve. The strength of the device for the respiration is reduced by making the respiration less hard, smoother and closer to the one of a normal environment by means of said second stage.

Moreover, it should be considered that outflow valves in said second stages are arranged in an area that is lower than the mouthpiece whereby to prevent the creation of bubbles in front of the face that can firmly prevent a clear vision, the valve is located in a transversal outflow duct whose outlet orifices are provided at the two sides of the mouth and/or chin in an laterally offset position such that the gas is deviated from the normal vision area that in this case is delimited by the view angle permitted by the underwater mask.

In this situation, the fact of providing shutter disks and/or valve seats that are elongated perpendicular to at least a line or a band or to both the lines and bands along which the retaining means operate and in the direction of the outflow duct axis allows to direct the breathed out air outflow towards the corresponding outlet orifices of the outflow duct itself, in addition also to the fact of approaching the opening area of the valves to said outflow orifices of said outflow duct. All this considerably improves the ease and the effort of breathing out making the user breathing out period closer to the natural condition.

The outflow duct provides the advantageous possibility of fabricating retaining means in the shape of a stop rib that may be formed as transversal wall departing from the internal wall of said duct opposed to the shutter disk.

Such transversal wall constitutes also a component for extinguishing possible flux flows inside the outflow duct that can cause the lifting of the shutter disk. The extinguishing act of the flux flow through the outflow duct from one outlet orifice to the opposite outlet orifice, provided to avoid the lifting of the shutter disk, obviously cooperates with the stop rib that obviously operates to retain the shutter disk against the valve seat at least along the band for adhering said rib to said shutter disk.

Further improvements of the invention are object of the dependent claims.

The invention will appear more clearly from the following description of some non-limiting embodiments shown in the annexed drawings, in which:
Figs. 1 to 3 show membrane valve behaviour according to prior art.
Figs. 4 and 5 are a perspective view of a shutter disk in closing and opening condition according to the principle of the present invention.
Fig. 6 is a lower side view of a second stage with reference to the position of use thereof by a user in a vertical position.
Fig. 7 is a cross-sectional view through a plane containing the axis of the clamping pin of the shutter disk of a valve for the outflow of breathed out air in a second reduction stage of an underwater regulator according to the present invention, particularly taken along the line VIII-VIII of fig. 8.
Fig. 8 is a view on the valve seat of the second stage of fig. 6 in direction of the axis of said valve seat, the removable part of the outflow duct leading the stop rib being omitted.
Figs. 9 to 11 are various views on the removable part of the outflow duct coinciding with the outflow valve according to the preceding figures 6 to 8.
Figs. 12A and 12B to 17A and 17B are respectively a perspective view and a corresponding plant view wherein the passage opening of the valve seat of various variation embodiments of the invention is indicated by discontinuous lines.

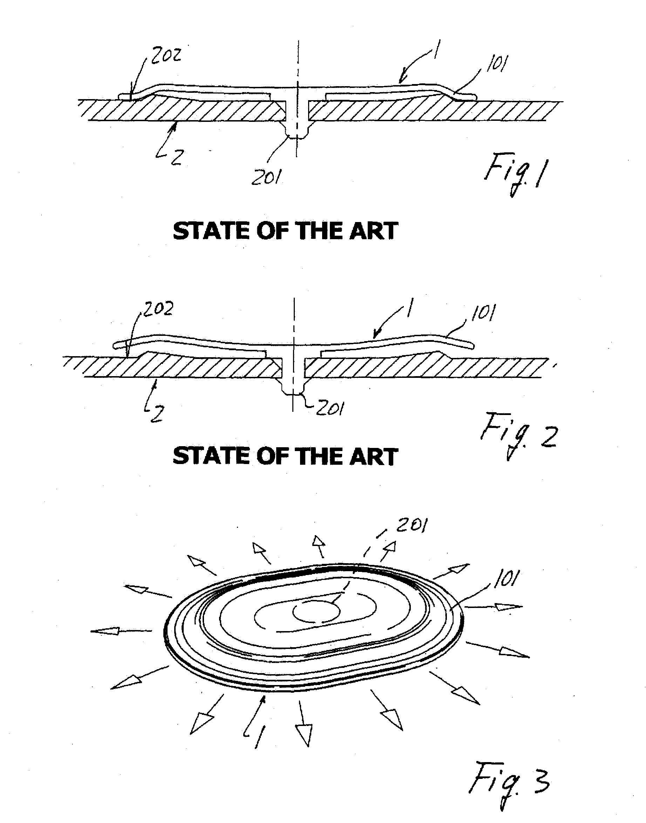

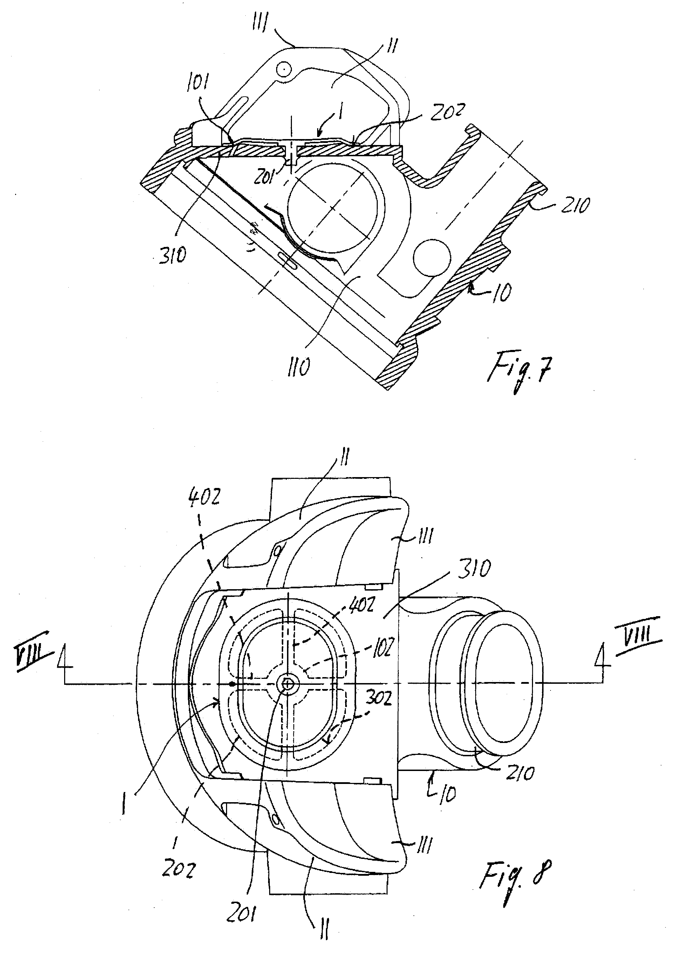

Figs. 1 and 2 show a membrane valve according to the current prior art. The membrane valve comprises a shutter disk 1 cup-shaped, having a central circular flat portion and a conic peripheral sealing lip 101. As it appears also from the following figures 8 and 12 to 17, the membrane is fixed to the valve seat 2 by means of a central pin 201 elastically engaging in a central clamping hole realized in a hub 102 of a circular valve seat 2. The sealing lip 101 of the shutter disk 1 cooperates with a circular wall 202 of the valve seat circumscribing an opening 302. This is divided by radial bridges supporting the hub 102.

As it appears evident from the figures, in the case of an overpressure on the side of the valve seat opposite to that of the shutter disk, the shutter disk is deformed in such a way as to lift the peripheral sealing lip 101 from the annular circular wall 202 of the valve seat causing the opening of the valve. The deformation of the shutter disk 1 when it opens for the outflow of internal pressure is illustrated in figure 2. It can be noticed that the overpressure causes not only the lifting of the peripheral sealing lip 101 but it provides a sort of elastic swelling of the shutter disk that causes a fall of the overpressure efficaciously operating for the lifting, a part of the overpressure being absorbed by the elastic deformation of the shutter disk.

Moreover the figure 2 shows how the lifting of the sealing lip 101 of the shutter disk 1 is substantially uniform along the whole perimeter of the shutter disk 1 and also how such lifting causes only a thin passage gap between the circular wall 202 of the valve seat 2 with which cooperates the peripheral sealing lip 101 of the shutter disk 1.

Figure 3 shows a variation of known membrane valves wherein an elongate-shaped shutter disk is provided. In such case, the known shutter disk has two clamping pins provided in focus or centres respectively of the two arched ends. While such arrangement increases the outflow section by means of the greater external length of the sealing lip, it has no influence as regards an improvement of the deformation effect that occurs in membranes valves with circular shutter disk as described before, on the contrary, the area interposed between the two clamping pins is much more sensitive to a swelling elastic deformation hence operating in the opposite direction to a removing of the aforementioned drawback.

For simplicity reasons in figure 3 it has been omitted the valve seat that has a shape similar to that of the shutter disk according to what mentioned before, the annular surface 202 forming the valve seat being coincident with the sealing lip 101 of the shutter disk 1 and so being of a corresponding plant shape.

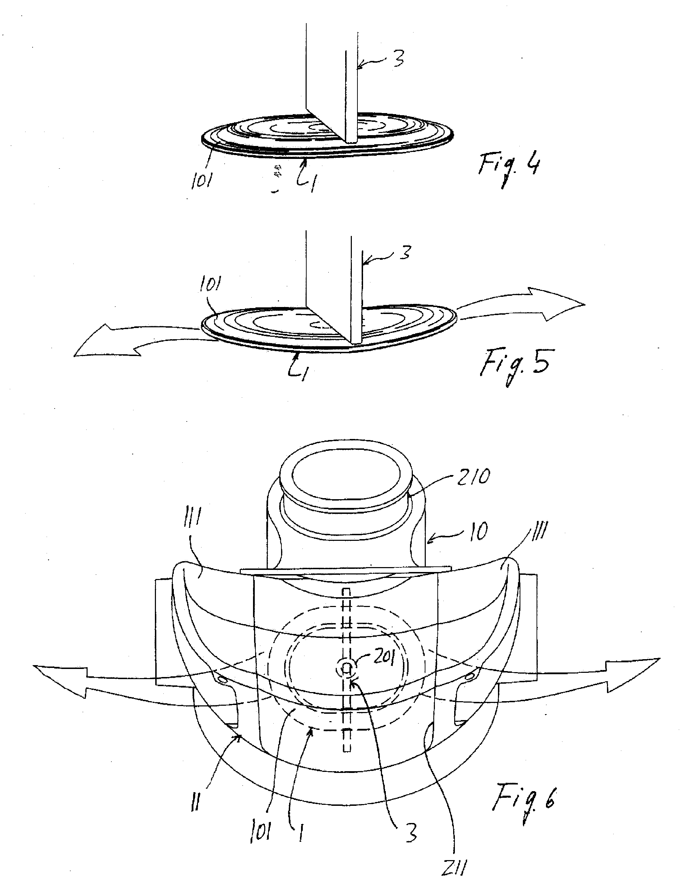

Figures 4 and 5 show the principle of the present invention. Due to reasons that will be evident below, while the principle is illustrated with reference to a valve having not-circular shutter disk, but with an elongate disk, the principle according to the invention allows to obtain the advantages described before even with traditional circular shutter disks. In the example of figures 4 and 5 a diametral transversal rib 3 is provided in contact with the outside surface of the shutter disk 1. Preferably, the contact position is such that the rib touches or laps the outside surface of the shutter disk 1 without determining a pressure thereon in closing position of the membrane valve.

The stop rib 3 may have any thickness at the edge 103 in contact with the shutter disk 1. Such contact edge 103 may be tapered and it has a rounded tip such that it does not engrave or damage the shutter disk 1.

A variation of the contact surface length between the rib 3 and the shutter disk causes a modification in the opening behaviour of the valve with reference to a overpressure operating in the opening direction thereof on the shutter disk 1. In this way, it is possible in an experimental way to calibrate the outflow valve referring to a predetermined opening overpressure thereof. Such calibration may be executed in an experimental way.

Referring to the operation of the membrane valve according to the invention, the stop rib 3 on one hand avoids or limits in a drastic way the partial swelling deformation of the shutter disk when occurs an opening overpressure, on the other hand it causes an opening behaviour of the valve according to which the shutter disk lifts as if the two portions thereof defined by the area in contact with the stop rib 3 are hinged one with respect to the other. Such opening behaviour is shown in figure 3.

As it is immediately evident from figure 3, in addition to eliminate or limit the swelling deformation effect of the shutter disk, the substantially book-like opening thereof causes an increase of the passage section, because at the two areas of the shutter disk opposite to each side of the stop rib 3 the lifting of the shutter disk 1 and/or the sealing lip 101 from the corresponding portion of the valve seat is greater than the case of prior art shutter disks, so that the light or passage section is greater.

According to a further feature that is illustrated in figure 3, the shutter disk 1 may have a shape different from the circular shape provided in prior art and particularly an elongate shape in the transversal direction of the stop rib 3, on one or both sides of said stop rib 3.

The plant shape of the shutter disk may be of any type and as already described before said shape may be completely asymmetrical with relation to the axis defined by the pin 201 for clamping the shutter disk 1 to the valve seat.

However, preferably the plant shape of the shutter disk 1 is symmetrical at least with reference to the stop rib 3 or it is rotational symmetrical with reference to the axis of the clamping pin 201.

Among the possible plant shapes the elliptic, oval shapes or elongate shapes having semicircular head segments joined by straight or arched perimeter lines are preferred.

In such case, the stop rib 3 is oriented according to the minor axis and perpendicular to the major axis and as well as it is coincident with the axis of the central clamping pin 201.

Advantageously even the valve seat is fabricated with a shape corresponding to that of the shutter disk.

Since the shutter disk shape may be asymmetrical with respect to the stop rib 3, said rib may be provided to be coincident with the axis of a clamping pin 201 or in a position laterally offset with respect to this one.

It is possible to provide a great amount of constructive variations.

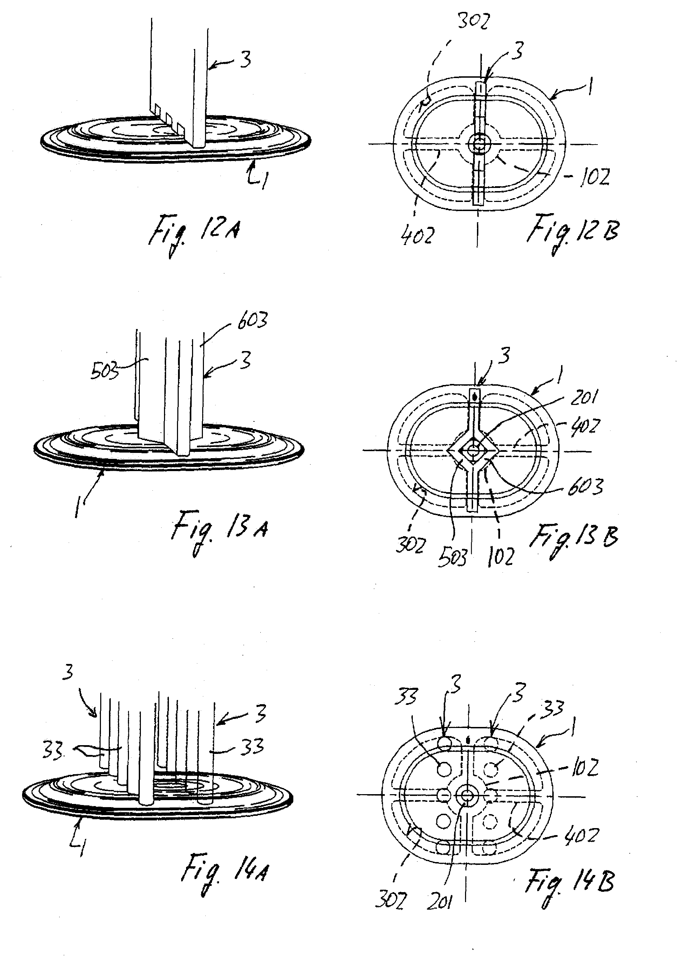

In figure 12 to 17, some of the possible variations are shown respectively A and B, without having a limiting sense.

Figs. 12A and 12B show a perspective view and a plant one of a valve according to a first variation of the invention.

In such case, the stop rib 3 adheres against the shutter disk 1 in a discontinuous way, said rib being toothed manufactured at least at the end in contact with the shutter disk.

Referring to figs. 13A and 13B, the stop rib 3 branches at the area between the clamping pin 201 and the shutter disk 1 surrounding it and having two branches 503, 603 extending at first in diverging directions and then in converging directions one with respect to the other and joining again in a single branch of the rib comprising therebetween the base for coupling the clamping pin 201 to the shutter disk. In the example the arrangement is polygonal, however it may be even curvilinear.

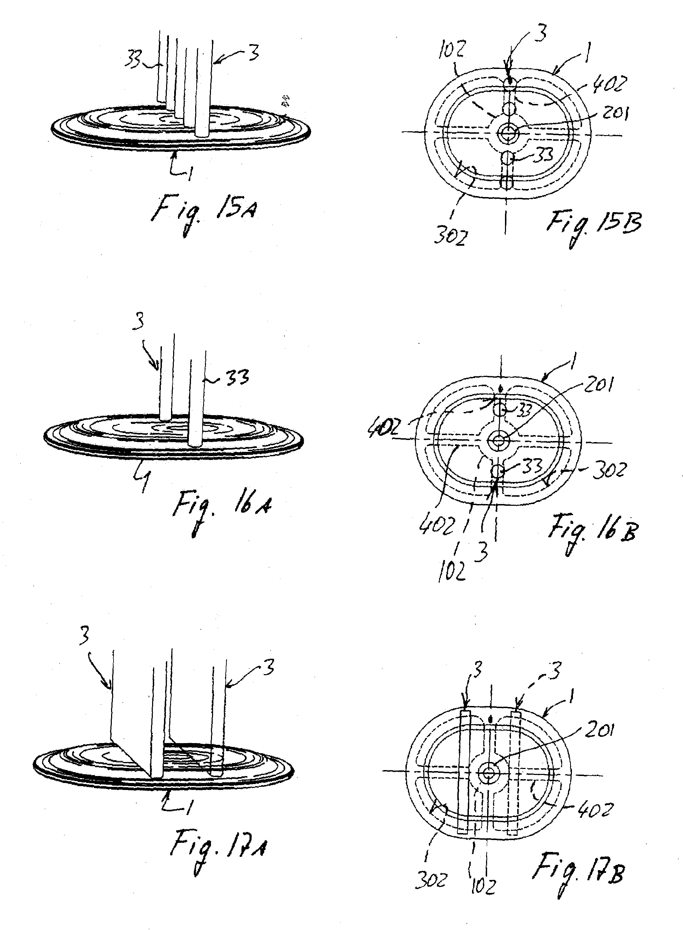

Figs. 15A and 15B show a further variation of the embodiment according to figs. 12A and 12B wherein the stop rib with toothed contact end is replaced by a row of rod-shaped members spaced one with respect to the other.

As indicated in figs. 16A and 16B the number of said components may be varied depending on the desired behaviour of the valve and/or material therefrom the shutter disk is made of.

Figs. 14A and 14B and figs. 17A and 17B show two embodiments of the same variation consisting in providing two stop ribs 3 or two rows of retaining rods 33.

In such case the two stop ribs 3, that can be even toothed fabricated analogously to the embodiment of fig. 12, extend on two sides of a minor median axis coincident with the axis of the clamping pin 201 hence with a perfectly symmetrical arrangement.

However, the arrangement may be even asymmetrical with respect to said minor median axis, the two stop ribs 3 or the row of retaining rods 33 being arranged one on a side and the other on the opposite side of said minor median axis, or the two stop ribs 3 or the two retaining rods 33 may be arranged at a predetermined distance one from the other on a single side of said minor median axis.

It should be noticed that, while all said embodiments are described and illustrated in figs. 12 to 17 in conjunction with an elongate shutter disk having symmetrical shape with respect to the clamping pin, however it is possible to provide a shutter disk with a asymmetrical shape with respect to said clamping pin 201 or an eccentric arrangement of clamping pin 201 with respect to a shutter disk 1 having a plant shape with predetermined rotational or specular symmetries.

Analogously even the embodiments of figs. 12 to 17 may be applied to shutter disks of circular shape having a clamping pin provided alternatively in concentric position and in eccentric position.

Generally, the above principle of the present invention may be applied also to known membrane valves having an elongate shape and two clamping pins substantially arranged coincident with the centres of the elongate shape. In such case, the stop rib or ribs and/or the retaining rod or rods may have several arrangements corresponding to the embodiments described before and illustrated with reference to elongate shutter disks having a single clamping pin.

In addition to the above embodiments and eventually in conjunction or in alternative thereto, the effect of stop ribs and/or rows of stop rods 33 may be achieved even by providing on the side of the shutter disk facing the valve seat another row of clamping pins cooperating with as many engaging holes of a traverse of the valve seat that divides the passage opening in at least two portions.

Obviously, if two stop ribs 3 or two rows of stop rods 33 are provided it is possible to provide, alternatively or in combination, two rows of clamping pins of the shutter disk aligned along directions coincident to that provided for stop ribs and/or rows of stop rods.

Even in this case all the above configurations are possible with reference to various embodiments.

An advantageous and particularly simple shape is the one providing that the row of clamping pins includes even the clamping pin 201.

When two stop ribs 3 or two rows of stop rods 33 or two rows of clamping pins should be also provided, it is even possible to replace one of the ribs with a row of retaining rods or with a row of clamping pins and vice-versa, all the possible arrangements being provided.

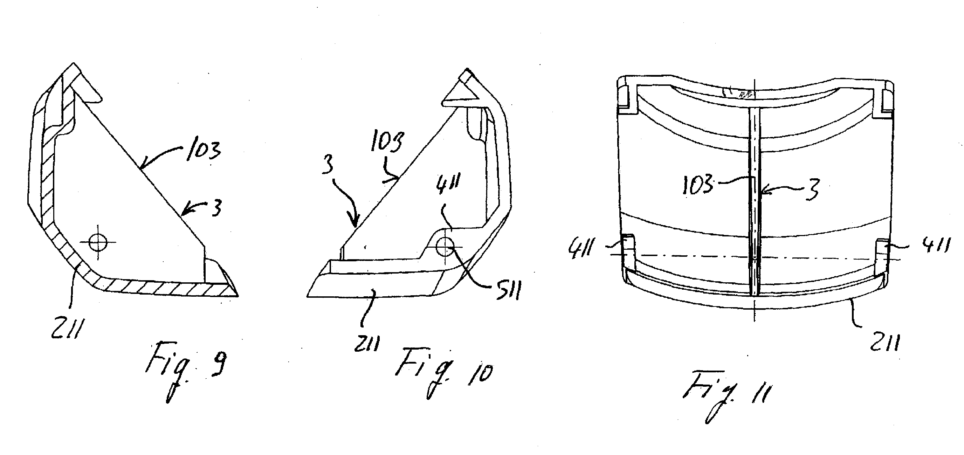

Figs. 5 to 11 show a particular application of the membrane valve according to the invention. In such case, said membrane valve is used as outflow valve for the air breathed out by the user in a second reducing stage of an air breathing apparatus for underwater diving.

For shortness and clearness purposes, the illustrated embodiment provides a membrane valve with symmetric configuration, a single central clamping pin and a stop rib 3 in a position coincident with the minor axis coincident with the clamping pin 201. This is not to be intended in limiting sense because it is possible to combine with the second reducing stage a membrane valve according to any of the several variations that have been illustrated and/or described above.

The example of figs. 5 to 11 provides a second reducing stage with a case 10 delimiting a chamber for supplying air to be breath in or out by the user. The air is breathed in by the supply chamber 110 and breathed out therein by means of a mouthpiece (not shown being of a known type per se) of smooth material connected to an intake/expiration mouthpiece 210 communicating with said supply chamber 110.

In fig. 5 the second stage is shown in the position of use with the user in vertical position.

Below the area of the breath in/breath out mouthpiece 210, in a leveling 310 of the peripheral wall of the case 10, a valve seat is realized comprising the annular wall 202 sealingly in contact with the sealing peripheral lip 101 of a shutter disk. In the central area a clamping pin 201 of the shutter disk is engaged by elastic forcing in a hole.

Referring to figures 4 and 6, the valve seat has an elongate or substantially elliptic opening 302 composed of four quadrants spaced-apart by radial ribs 402 for supporting the central hub 102 wherein the central hole engaging the clamping pin 201 of the shutter disk is provided. The shutter disk 1 is illustrated by a broken line. Even the rib 3 is illustrated by a broken line.

In this case, the shutter disk has a substantially elliptic shape and cooperates, as already described above, with the surface surrounding the sectors 302 of the passage opening of the valve indicated at 202.

The shutter disk 1 is applied on the external face of the leveling 310 and such leveling is completely covered on the outside by a C-shaped element 111 composing a transversal outflow duct 11, with reference to the median axis including or parallel to the axis of the clamping pin 201 of the shutter disk 1 or to the axis of the intake/expiration mouthpiece 210 of the case 10.

The duct 11 has opened head sides and in the central area it is made as it can be opened, the central part 211 thereof being removable like a little cap. The removable part 211 of the wall of the outflow duct 11 extends substantially for the all length of the valve in the direction of the axis of the outflow duct 11 so that the removable part can be completely accessible for cleaning purposes.

As shown in figures 4 and 9 to 11, a transversal wall constituting in this case the stop rib 3 departed from the central area of said removable part 211. In placed position of said removable wall part 211 of the outflow duct 11 (see fig.6), as described above, the rib 3 adheres against the external face of the shutter disk 1 with its free edge 103, whereby in this case the membrane valve has the same functionalities according to the present invention.

The removable part 211 of the outflow duct 11 may be secured to the same by means of axial pins with reference to the axis of the outflow duct said pins engaging with corresponding holes 411 of corresponding ears 511 of fixed walls 111 of the outflow duct 11 and removable part 211. The fixed parts 111 of the wall of the outflow duct 11 formed the two final ends of the outflow duct 11 and the removable part 211 is interposed therebetween.

Due to what said before it is evident that the elongation of the shutter disk on the two sides with reference to the stop rib 3, causes a shifting of the valve passage opening in the direction of the two outflow orifices of the outflow duct 11. Therefore, the fact that the openings and the area of maximum passage light of the valve are arranged nearer to the outflow orifices of the outflow duct 11, provides, in addition to the advantage of having more passage light in the opening condition of said membrane valve, as already mentioned before, an additional improvement of outflow conditions of breathed out air, reducing the outflow strength of breathed out air. Moreover, the particular behaviour of the shutter disk 1 in the opening condition creates per se an outflow flux of said air that due to the configuration of the passage lights has a predetermined orientation in the direction of said outflow orifices of the outflow duct 11.

Thanks to these features, not only the membrane valve has a better opening behaviour and so it requires a less effort for the user than the effort that is necessary at present with the known membrane outflow valves, but the main part of the outflow flux of breath air is directed towards the outflow orifices of the outflow duct 11 and hence it has a direction that helps the air outflow from the regulator in a laterally offset position with respect to the user field of view.

Naturally the invention is not limited to the specific described application, or to the embodiment form of the described example for the specific embodiment. Hence, the valve according to the invention may be employed in all fields wherein the known membrane valves are already used. Analogously, the embodiment of the described second stage is not intended to be considered limitative, the invention extends even to other embodiments that obtain the same advantages by using the same principle.

## Claims

1. A second stage for reducing the pressure in two stage regulators for underwater use, comprising a chamber (110) for supplying a gas or a gas mixture, that can be breathed by a mouthpiece (210) communicating with said chamber (110), which chamber (110) has an inlet connected to a first stage for reducing the pressure that is connected to a gas or gas mixture source that can be breathed at high pressure, particularly a bottle, by means of a valve that is operable in the opening position by the respiration in depression and in the closing position by the strength of a closing spring and which chamber has in a partition wall (310) between said chamber (110) and the outside at least a valve (2) for the outflow of the breathed out air, which outflow valve (2) is a membrane valve, said membrane valve (2) comprises:
- a shutter disk (1) of flexible elastic material cooperating with a valve seat (2) comprising at least one passage opening (302) provided in a wall (202),
- said shutter disk (1) comprises means (201) for clamping to the seat valve (2), which clamping means are engaged at least in a complementary clamping housing (102) of the valve seat (2),
- said valve seat (2) comprises a continuous surface and closed on itself which is in sealingly contact with at least a corresponding peripheral sealing lip (101) of the shutter disk (1),
- said contact surface between the valve seat (2) and the sealing lip (101) of the shutter disk (1) and which sealing lip surround at least a passage opening (302),
**characterised in that** retaining means (3, 201') of the shutter disk are provided, which means are located against the valve seat (2) at least along a line or a band extending along a secant of the shutter disk (1) itself, being said retaining means composed of a at least stop rib (3), which rib (3), in the close condition of the valve, rests without pressing against the side of the shutter disk opposite to the valve seat (2) and said valve (2) for the outflow of the breathed out air is housed inside an outflow tubular duct (11) formed on one side by the wall (310) of the supplying chamber (110) wherein it is provided the outflow valve (2) itself and by a profiled member (111) with arched section that is fixed or fixable in a removable way at least partially above said wall (310) and covering completely said wall (310) towards the outside, which tubular member (111, 211) has at least one of the two head ends or both the head ends opened towards the outside, the stop rib (3) being formed by an intermediate transversal wall of said profiled member with arched section (111, 211).

2. Second reduction stage according to claim 1, **characterised in that** the shutter disk has at least a central clamping pin (201) that can be engaged by elastic forcing into a corresponding housing hole in a central hub (102) of the valve seat, the stop rib being oriented with the surface in contact with the shutter disk (1) extending along a line or a band intersecting with the axis of said clamping pin (201) or laterally offset with respect to said line or band intersecting with the axis of said clamping pin (201) and/or of said housing hole thereof of the valve seat (2).

3. Second reduction stage according to claim 2, **characterised in that** the wall (310) of the supplying chamber (110) wherein the outflow valve (2) is provided is constituted by a flattening of the peripheral wall of the supplying chamber (110) with an inclined orientation with respect to the axis of the mouthpiece (210) and arranged below the mouthpiece (210), with reference to the position of use of the second stage and to the vertical position of the user and the outflow duct (11) is oriented transversal to the axis of the mouthpiece (210) substantially according a direction such that the head openings of the outflow duct (11) are provided at the two sides of the vertical median plane containing the axis of the mouthpiece (210) and at two sides in a substantially coincident position or in a position displaced more towards the outside with respect to the user mouth.

4. Second reduction stage according to one or more of the preceding claims, **characterised in that** at least the shutter disk (1) and/or the valve seat (2) have a circular shape or a shape that can be inscribed in a circle with respect to the clamping pin (201) and/or to the housing hole thereof.

5. Second reduction stage according to one or more of the preceding claims 1 to 3, **characterised in that** at least the shutter disk (1) and/or the valve seat (2) have a symmetrical or asymmetrical elongated shape in two directions that are diametral opposite with reference to a clamping pin (201) and/or to the corresponding housing hole thereof and which directions are at least transversal, particularly perpendicular to the orientation of the retaining means, that is of the lines or bands for resting the retaining means on the shutter disk so that said shutter disk (1) and/or the valve seat (2) have an elongated shape in direction of the axis of the outflow duct (11) and in direction of at least one or both the head openings of said outflow duct (11).

6. Second reduction stage according to claim 5, **characterised in that** the shutter disk (1) and/or the valve seat (2) have an elliptic or substantially elliptic shape or a slot-like shape with semicircular ends, the major axis being oriented parallel to the axis of the outflow duct (11) and the transversal wall forming the stop rib (3) being coincident with the minor axis coincident with the clamping pin (201) of the shutter disk (1) and/or with the housing hole thereof in the valve seat (2).

7. Second reduction stage according to one or more of the preceding claims, **characterised in that** the shutter disk (1) and/or the valve seat (2) have an elliptic or substantially elliptic shape or a slot-like shape with semicircular ends, the major axis being oriented parallel to the axis of the outflow duct (11) and the transversal wall being provided with a branch to form two stop ribs extending parallel one with respect to the other and symmetrically or asymmetrically with respect to the minor axis coincident with the clamping pin (201) of the shutter disk (1) and/or with the housing hole thereof in the valve seat (2) or two transversal walls being provided parallel one with respect to the other.

8. Second reduction stage according to one or more of the preceding claims, **characterised in that** it comprises retaining means (3, 201') of the shutter disk (1) against the valve seat (2) along two different lines or two different bands which are secant to the shutter disk (1).

9. Second reduction stage according to one or more of the preceding claims, **characterised in that** it has two stop ribs (3, 3') extending at least for a part of their length or for their whole length in parallel and spaced one with respect to the other and cooperating with the shutter disk (1) along two different secant lines or bands of the shutter disk (1) itself.

10. Second reduction stage according to one or more of the preceding claims **characterised in that** the retaining means (3, 201') of the shutter disk (1) against the valve seat (2) operate for a part of the extension along the shutter disk (1), along a single or common secant line or band and for the remaining part of the extension of the shutter disk along two different lines or bands which are secant to the shutter disk (1).

11. Second reduction stage according to one or more of the preceding claims, **characterised in that** the retaining means (3, 201') of the shutter disk operate on a secant line or band coincident with a median or diametral axis of the shutter disk (1).

12. Second reduction stage according to one or more of the preceding claims 1 to 10, **characterised in that** retaining means (3, 201') of the shutter disk (1) operate on a secant line or band coincident with an axis that is laterally offset with respect to a parallel median or diametral axis of the shutter disk.

13. Second reduction stage according to one or more of the preceding claims, **characterised in that** the two stop ribs are arranged symmetrically with respect to the clamping pin (201) of the shutter disk and/or are arranged symmetrically with respect to a parallel median or diametral axis of the shutter disk (1).

14. Second reduction stage according to one or more of the preceding claims, **characterised in that** the two stop ribs are arranged one on a side and the other one on the opposite side of the clamping pin (201) of the shutter disk in a asymmetrical way with respect to the shutter disk and/or with respect to a parallel median or diametral axis of the shutter disk or said two stop ribs are both arranged on the same side of the clamping pin (201) of the shutter disk (1) and/or both on a single side with respect to a parallel median or diametral axis of the shutter disk (1).

15. Second reduction stage according to one or more of the preceding claims, **characterised in that** it comprises at least two clamping pins spaced one with respect to the other, being the stob rib or the two stop ribs arranged between the two clamping pins and oriented transversally or orthogonally with respect to the straight line that joins the axis thereof.

16. Second reduction stage according to one or more of the preceding claims, **characterised in that** the shutter disk has two clamping pins, a stop rib being provided coincident with each of the two clamping pins.

17. Second reduction stage according to one or more of the preceding claims, **characterised in that** it has at least two clamping pins spaced one from the other, the stop rib being oriented with the surface in contact with the shutter disk (1) extending along a line or a band coincident or parallel with respect to the ideal straight line that join the axis of the two clamping pins or the two stop ribs being arranged parallel with respect to the straight line that joins the axis o the two clamping pins, symmetrically or asymmetrically with respect to said straight line.

18. Second reduction stage according to one or more of the preceding claims, **characterised in that** said at least one or both stop ribs extend in contact with the shutter disk (1) in a continuous or discontinuous way for the whole extension thereof or only for a part or at partial sections of the shutter disk extension along the stop rib or ribs, the said partial sections being spaced one from the other, being for example the resting edge of the stop rib (3), which cooperates with the shutter disk (1), comb or toothed shaped.

19. Second reduction stage according to one or more of the preceding claims, **characterised in that** the retaining means are partially composed of a row of stop pins (201') departing from the shutter disk (1) and engageble or engaged in corresponding housing holes in a traverse that intersects the passage opening (302).

20. Second reduction stage according to one or more of the preceding claims, **characterised in that** it comprises two separated retaining means operating along two different lines or bands which are secant to the shutter disk and said retaining means being formed one by at least a stop rib and the other one by at least a row of stop pins.
